# EUROPEAN PATENT APPLICATION

(11) **EP 0 642 044 A1**
(43) Date of publication of application: **08.03.1995**
(21) Application number: 94306408.9
(22) Date of filing: 31.08.1994
(51) Int. Cl.: G02B 6/38, H01R 13/453, F16L 37/30

(54) **Line terminal particularly signal transmitting, connector assembly**

(30) Priority: 02.09.1993 IL 10687693
(71) Applicant: State of Israel Ministry of Defence Raphael Armament Development Authority, Haifa (IL)
(72) Inventor: Don-Yehiya, Yehuda, Kiryat Yam (IL)
(74) Representative: West, Alan Harry

(57) **Abstract**

The conductor assembly for optical or electrical conductor or fluid line terminals, according to the invention, comprises a socket and a plug, each having a cavity for receiving conductor terminals. Socket and plug are mutually displaceable to engage them, whereby to engage the respective conductors and allow signals to be transmitted between them or to engage the respective fluid line terminals to allow fluid to flow through them, or to disengage them, whereby to disengage said conductors or said fluid line terminals. Each of them is provided with a cover for screening the respective conductor terminals from the environment, when closed, and baring them when open, and with elastic means urging the cover to its closed position. Opening means are provided for bringing said covers to their open positions when socket and plug are engaged, said elastic means bringing said covers back to their closed position when said socket and plug are disengaged.

## Description

This invention relates to line terminal connector assemblies, more particularly signal transmitter connector assemblies, specifically to an assembly for permitting the transmission of optical or electrical signals between the terminals of two transmission lines or between a generator and a transmission line, or between a transmission line and a receiver. Such signal transmitter connector assemblies of the invention may further be provided with additional connections, such as for feeding a gas therethrough. Further, the connector assemblies of this invention may serve to connect fluid, e.g. gas, lines, in the absence of optical or electrical terminals.

Connector assemblies for electrical or optical conductors are conventional in the art. In the case of optical fibers the problem arises of protecting them against contamination from dirt, dust and the like, which may cause an alteration in the transmission of optical signals. Another problem which arises is how to protect the eye of the user against accidental damage from radiation, e.g. laser radiation, issuing from the terminals of conductors and emitters. Electrical conductors are less sensitive to contamination, but they should desirably be protected against it, especially in applications in which a perfect electrical contact is important.

USP 4,640,575 discloses a combination dust cover and radiation shield which normally covers and can be forced into close engagement with a terminal from which radiation, e.g. laser radiation, is emitted, and can be detached therefrom and deformed to allow insertion of another terminal. Such a device, however, requires manual operation, is unreliable because it is based on the elastic memory of the flap, and is structurally awkward and adapted to be applied only to a socket type terminal. It is therefore of very limited applicability and efficiency.

DE 3307289 discloses a connection for optical fibers in which both terminals are closed by a transparent plate, both plates being elastically mounted to facilitate their coming into contact. This device actually provides no protection against dirt, because such dirt will accumulate on the transparent plates and interfere with the transmission of optical signals. Their presence, further, may interfere with a good optical engagement of the terminals.

OLS 2734522 discloses a connection for optical fibers in which one terminal is protected by a flexible membrane, which is cut along radial lines, so that the terminal itself may penetrate through the membrane, deflecting it outwardly, and engage the other terminal. This device affords protection to one terminal only and further is based on a flexible membrane and is therefore not reliable. Furthermore, when the two terminals are coupled, the flexible membrane is deflected towards the inside of the coupling and tends to introduce into it any dirt that may have accumulated thereon.

USP 4,411,491 describes a connector assembly wherein the two terminals are protected by flexible membranes that are centrally slit, displacement means being provided for deforming the membranes, upon engagement of the connector components, so as to widen the slit and permit passage and mutual engagement of the optical elements. This device is structurally complicated and does not provide full protection of the optical terminals. Since it is based on the deformation of flexible membranes, it is not reliable and its performance on reusing is doubtful, as it is based on the assumption that the membranes will fully recover from the deformed state in which they have been kept during the operation of the coupling. Further, it too tends to introduce into the coupling any dirt that may have accumulated on the membranes.

USP 4,696,540 discloses a connector assembly in which both terminals are protected by a diaphragm, and both diaphragms are perforated by ferrules mounted on the ends of the optical fibers of one terminal, which can thus come into optical engagement with the fibers of the other terminal. This device is intended for underwater use and, if applied to other uses, it is needlessly complicated. It is unreliable, because it entrusts the optical fiber ends, provided with ferrules, with a perforating action. It is not reversible, because once the diaphragms have been perforated, the device must be disassembled and reassembled if it is to be used again. Furthermore, the ferrules, in performing their perforating action, will pick up dirt that has accumulated on the diaphragms and carry it into the coupling.

None of the devices disclosed in the prior art has the qualities of being fully automatic, fully reversible, sturdy and completely reliable, and of a simple and economical construction.

It is an object of this invention to provide such a device which at least alleviates at least some of the problems of the prior art devices. It is another object of this invention to provide such a device which does not rely on flexible membranes or the like elements.

It is a further object to provide such a device which will prevent any dirt that may have accumulated thereon from coming into contact with the conductor terminals.

It is a still further object to provide such a device which will completely protect the terminals both in their disengaged and in their engaged relationship.

It is a still further object to provide such a device that can be engaged and disengaged with a simple and quick motion.

It is a still further object to provide such a device that is provided with means for assuring that an exact positioned relationship of the terminals, and therefore a perfect optical or electrical contact, is automatically achieved.

It is a still further object to provide a connector device for fluid lines terminals which completely protects the terminals in their engaged and disengaged positions.

Other objects and advantages of the invention will become apparent as the description proceeds.

The connector assembly for optical or electrical conductor or fluid line terminal, according to the invention, is characterized in that it comprises:
a - a first component, hereinafter called "socket member" or "socket", having a cavity defined therein for receiving first terminals;
b - a second component, hereinafter called "plug member" or "plug", having a cavity defined therein for receiving second terminals;
c - said socket and said plug being mutually displaceable mutually to engage them, whereby to bring said first and second terminals into an engaged or connected positioned relationship, or mutually to disengage them, whereby to bring said first and second terminals into a disengaged or disconnected, spaced positioned relationship;
d - first cover means, hereinafter called "first lid" in said socket, said first lid having a closed and an open position and screening, when in said closed position, said first terminals from the environment and baring said first terminals when in said open position;
e - second cover means, hereinafter called "second lid", in said plug, said lid having a closed and an open position and screening, when in said closed position, said second terminals from the environment and baring said second terminals when in said open position;
f - elastic means for urging said first and second lids to their respective closed positions when said socket and said plug are not in their engaged positioned relationship;
g - first opening means in fixed positioned relationship with respect to said socket for bringing said second lid to its open position when said socket and said plug are mutually displaced to bring them to their engaged positioned relationship; and
h - second opening means in fixed positioned relationship with respect to said plug for bringing said first lid to its open position when said plug and said socket are mutually displaced to bring them to their engaged positioned relationship;
i - said elastic means returning said first and second lids to their closed positions when said socket and plug are mutually displaced mutually to bring them to their disengaged positioned relationship.

In a preferred form of the invention, the terminals are or comprise optical or electrical terminals and their engaged positioned relationship is such that signals may be transmitted therebetween.

Preferably, said connector assembly comprises guide means in said socket and said plug for guiding them in said mutual displacements. Also preferably, said first opening means are so positioned in said socket that said second lid is brought to its open position before said second opening means become operative.

Also preferably, said lids are pivoted to the respective connector members and are swingable from their closed to their open positions, and vice versa; and the elastic means are tension springs attached to the lids so as to exert thereon a moment of rotation in such a direction as to maintain them in their closed position or bring them back to it when they have been opened.

The opening means comprise preferably a first surface on a base rigidly connected to the socket and a second surface on the second lid, which surfaces come into engagement when said plug and socket are mutually displaced to engage them, and are so positioned that said first surface exerts a pressure on said second surface, when they come into engagement, which produces a moment on said second lid having the opposite direction to the moment exerted thereon by the respective tension spring. The second opening means preferably comprise a third surface on a handle rigidly connected to the plug and a fourth surface on the first lid, which surfaces come into engagement when said plug and socket are mutually displaced to engage them, and are so positioned that said third surface exerts a pressure on said fourth surface, when they come into engagement, which produces a moment on said first lid having the opposite direction to the moment exerted thereon by the respective tension spring.

The plug and socket members preferably have seats defined therein for receiving each the lid carried by the other member when the same is in its open positions.

The plug and socket members have cavities or chambers defined therein for housing the terminals, the plug member preferably having a sleeve-like end portion or projection which fits into the socket chamber when the two members are engaged in their operative positioned relationship.

A number of embodiments of the invention will now be described, by way of example only, with reference to the accompanying drawings in which:
- Fig. 1 is a plane view from the top of a connector device according to an embodiment of the invention;

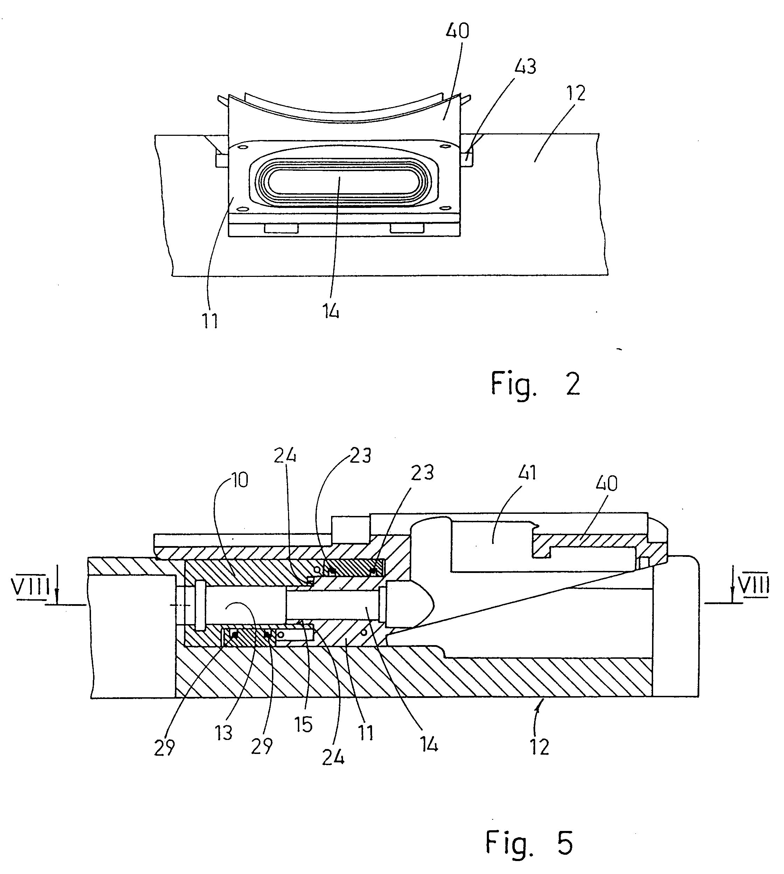

- Fig. 2 is a vertical end view of the device of Fig. 1, seen from the plane II of Fig. 1;
- Figs. 3 and 4 are vertical, longitudinal cross-sections of the connector of Fig. 1, taken on the planes III-III and IV-IV respectively, looking in the direction of the arrow, showing the connector in the inoperative condition;
- Figs. 5 and 6 are vertical, longitudinal cross-sections of the connector of Fig. 1, taken on the planes III-III and IV-IV of Fig. 1, respectively, showing the connector in its operative position;
- Fig. 7 is a horizontal cross-section of said connector in the inoperative position, taken on the plane VII-VII of Fig. 3 looking in the direction of the arrows;
- Fig. 8 is a horizontal cross-section of said connector in the operative position, taken on the plane VIII-VIII of Fig. 5 looking in the direction of the arrows;
- Fig. 9 illustrates, in cross-section similar to Fig. 8, a variant of the invention, wherein means are provided for feeding a fluid through the connector; and
- Fig. 10 illustrates, in cross-section similar to Fig. 9, a connector having optical fiber terminals therein.

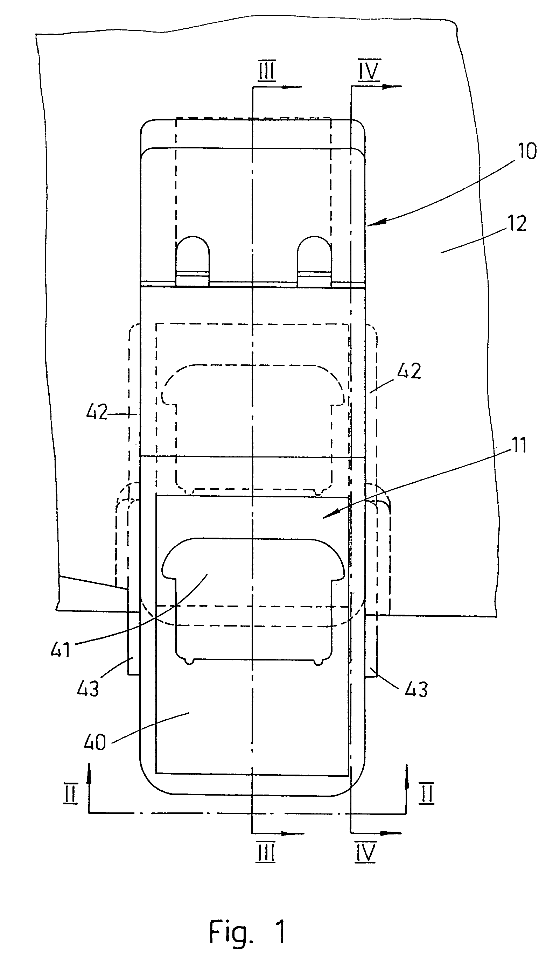

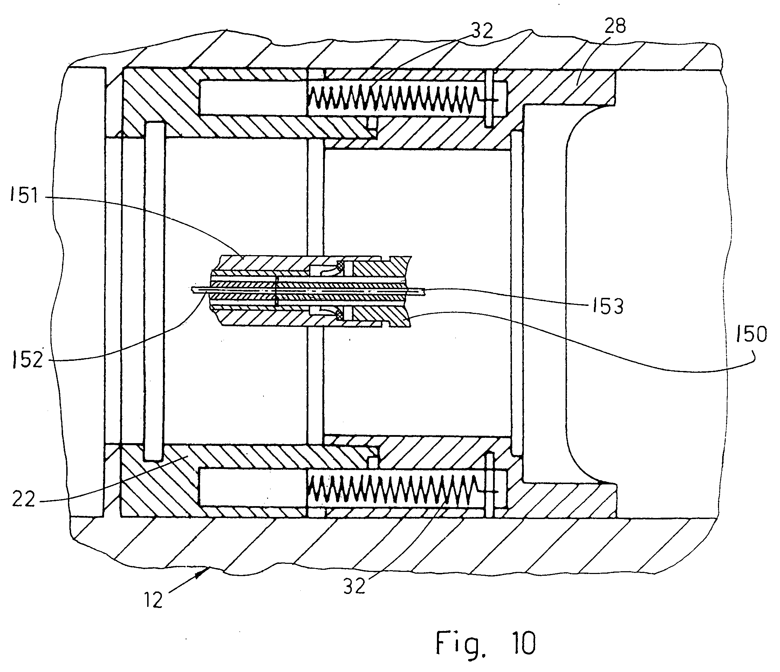

With reference now to the drawings, in the embodiment therein illustrated, one of the two elements of the connector, viz. the socket member, is attached to a base, which in this embodiment is a support body 12, shown in the drawings as broken off and which may be of any kind or shape, as long as it is suited to support the socket and to provide the guide and opening elements that will be described hereinafter. In the absence of a support body, the said guide and opening elements would have to be provided in parts attached rigidly or in fixed positioned relationship to the socket. The term "base", as used herein and in the claims, is intended therefore to include both a support body or any parts rigidly connected or connectable in fixed positioned relationship to the socket. The second element of the connector, generally indicated at 11, viz. the plug member, is shown in Fig. 1 in two different positions: in the disengaged or disconnected position in full lines and in the engaged or connected position in broken lines. The socket 10 comprises a cavity or chamber 13, in which the terminals of the optical fibers or electrical wires or in general any conducting elements that are to be connected by means of the connector, are housed. Correspondingly, the other terminals, also not shown, are housed in a cavity or chamber 14 provided in the plug 11. The said terminals are not shown in the drawings because they are not part of the invention and may be conventional. However, for purposes of illustration, optical terminals are schematically shown in Fig. 10. Chambers 13 and 14 are therefore terminal housing chambers. As most clearly seen in Fig. 5, plug 11 has a projection or end or forward portion 15 which is sleeve-shaped, and of such an outer diameter that it fits snugly within chamber 13 of the socket when the connector is in the engaged or operative position. In that position, the terminals carried by the plug and socket respectively have come into optical or electrical engagement, as the case may be.

The socket 10 is provided with a closure member or lid 20 which is a plate, preferably a metal plate, pivoted at 21 to body 22 of socket 10 and provided with grooves which preferably house gaskets 23 (best seen in Fig. 5). Said grooves are adapted to receive lips 24 of socket body 22. Similarly, plug 11 is provided with a closure member or lid 26, pivoted at 27 to body 28 of the plug and provided with grooves preferably housing gaskets 29 (best seen in Fig. 5) adapted to engage lips 30 of plug body 28. By the cooperation of socket and plug body lips with gaskets 23 and 29, chambers 13 and 14 housing the terminals are tightly protected against contamination when the plug and socket are disengaged.

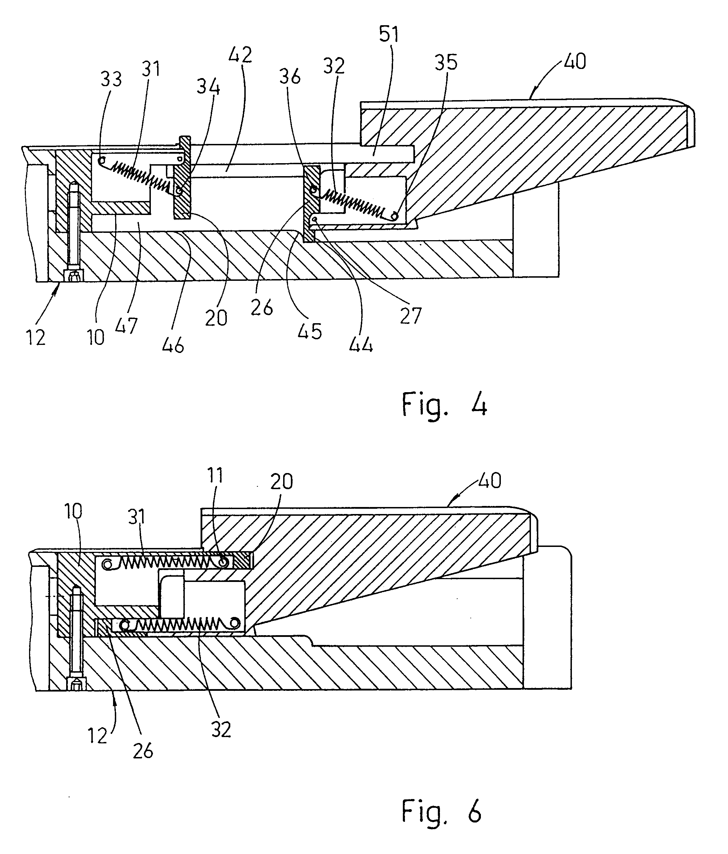

Socket 10 is provided with spring 31 and plug 11 is provided with spring 32. When the connector is in the disconnected or disengaged position, as seen in Fig. 4, spring 31, which is attached at 33 to body 22 of socket 10 and at 34 to lid 20, keeps this latter in an essentially vertical position, in contact with lips 24 of socket body 22, thereby to close the space within the seat 13 and fully protect the optical or electrical terminals housed therein from any contamination. Similarly, spring 32, which is attached at 35 to body 28 of plug 11 and at 36 to lid 26 of plug 11, keeps said lid 26 in an essentially vertical position, in engagement with lips 30 of plug 11, whereby to close chamber 14 and fully protect any optical or electrical terminals housed therein from any contamination.

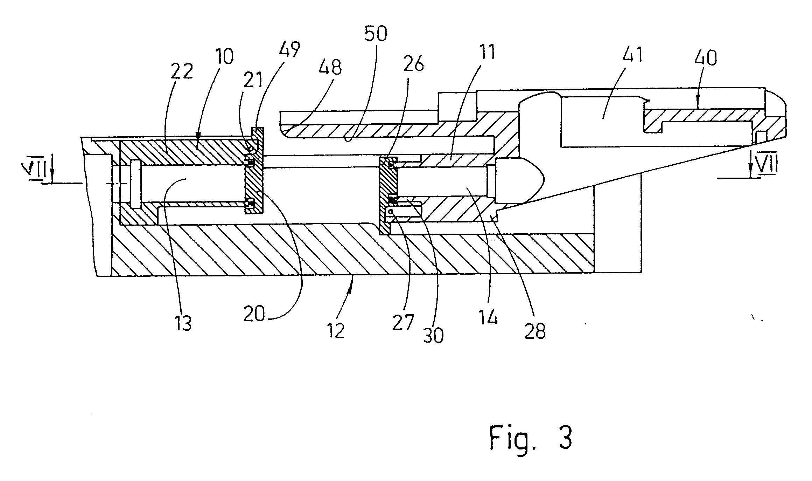

Plug 11 is provided with or rigidly connected to means for displacing it, which means will be generally called "handle", it being understood that this term is to be construed as signifying any element that is connected to the plug proper in fixed positioned relationship and is, in substance, an extension of the plug itself. In this embodiment, a handle 40 is provided, which may be shaped in any convenient way, as long as it permits to introduce the terminals into chamber 14 and to maneuver said plug to the connected or to the disconnected position, as the case may be. For this purpose, handle 40 is desirably provided with an opening 41, into which the operator may insert his fingers to pull the plug out of engagement with the socket. Support body 12 is provided with lateral grooves 42 adapted to be engaged by ribs 43 of the plug: see Fig. 1, wherein grooves 42 are shown in broken lines. The plug is thus guided in a sliding motion from the disengaged to the engaged position. As it so slides, the bottom lip 44 of lid 26 engages a shoulder 45 on support body 12 (see Fig. 4). As the plug is pushed further towards the closed position (to the left in the drawings), the engagement of lip 44 and shoulder 45 generates a moment about pivot 27 that is opposed to the moment of spring 32, and, as the plug continues to slide towards the engaged position, lid 26 rotates counterclockwise, as seen in the drawings, until it lies against a bottom horizontal surface 46 of support body 12. As the plug continues its motion, lid 26 slides into a seat 47 between surface 46 and the lower surface of socket 10 and assumes the position shown in Figs. 5 and 6. Also, a projection 48 of plug 11 engages the upper lip 49 of closure member 20 of the socket (see Fig. 3), generates a moment of rotation about pivot 21 that is opposite to the moment of spring 51, and causes lid 20 to rotate in a counterclockwise direction, as seen in the drawing, until it reaches a horizontal position against the lower surface 50 of projection 48. Finally, closure member 20 enters a seat 51 defined in the plug handle 40 (as clearly seen in Fig. 6). The engaged position illustrated in Figs. 4 and 6 is reached, wherein the sleeve-like projection or end portion 15 of plug 11 snugly fits into chamber 13 of socket 10 and the terminals housed in said chamber 13 and chamber 14 of the plug come into the desired optical or electrical engagement.

It may be desirable to avoid having to exert sufficient force on handle 40 concurrently to stretch both springs 31 and 32. To that end - as shown in Fig. 3 - projection 48 is preferably not as long as to come into contact with upper lip 49 when bottom lip 44 comes into contact with shoulder 45, so that one of the two lids is engaged and rotated before the other and is brought to its open position or close to it before the rotation of the other lid begins.

It is seen that, firstly, the lids or cover members 20 and 26 perfectly close terminal chambers 13 and 14 and fully protect the terminals housed therein from any contamination. Secondly, during the motion of the plug to the connected position, both lids or cover members are rotated away from their respective terminal housing chambers, and when they reach said connected position, they are located outside the space defined by the terminal housing chambers, from which they are separated by metal surfaces. In this way no dirt that may have accumulated on the lids is transferred to the space in which the terminals are finally housed, when they come into contact. The device is therefore of a sturdy, simple operation, and guarantees full protection of the terminals from any contamination - a result that no device of the prior art could achieve.

When the plug handle is pulled away from the socket, preferably by the operator's inserting his fingers into the opening 41 and pulling, the motions of the lids or closure members 20 and 26 hereinbefore described are reversed. As soon as lid 20 becomes disengaged from cavity 51 and lid 26 becomes disengaged from cavity 47, they begin to rotate clockwise (as seen in the drawings), under the action of the respective springs. As soon as lip 49 of lid 20 is disengaged from projection 48 of plug handle 40 and lip 44 of lid 26 is disengaged from shoulder 45 of the support body 12, there is no moment opposing that of springs 31 and 32, and both lids assume their closed position. The device, therefore, is fully reversible.

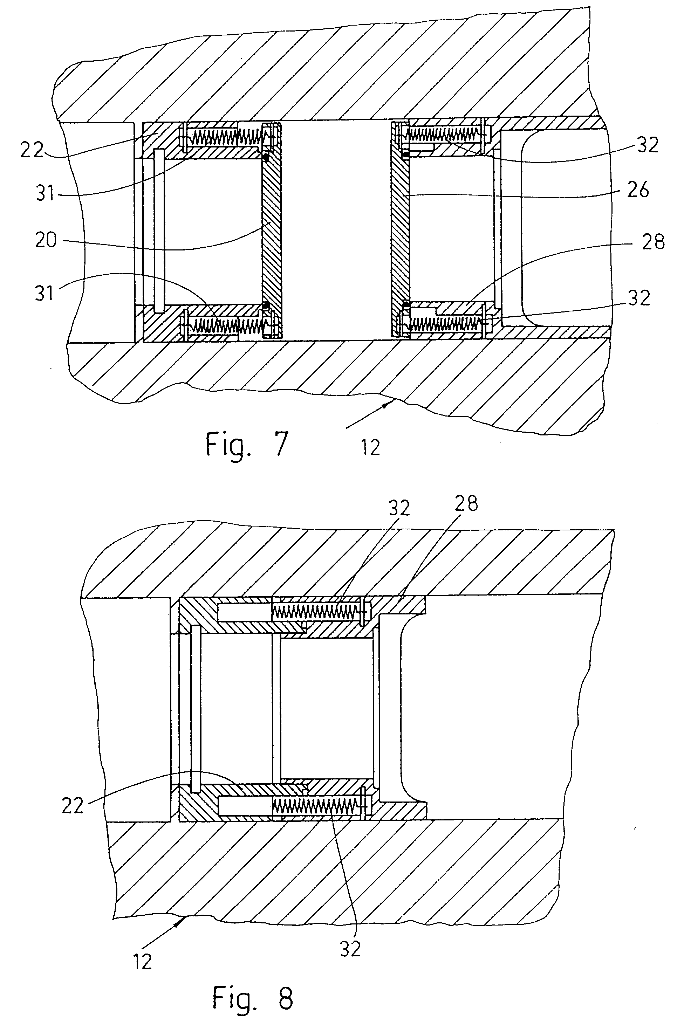

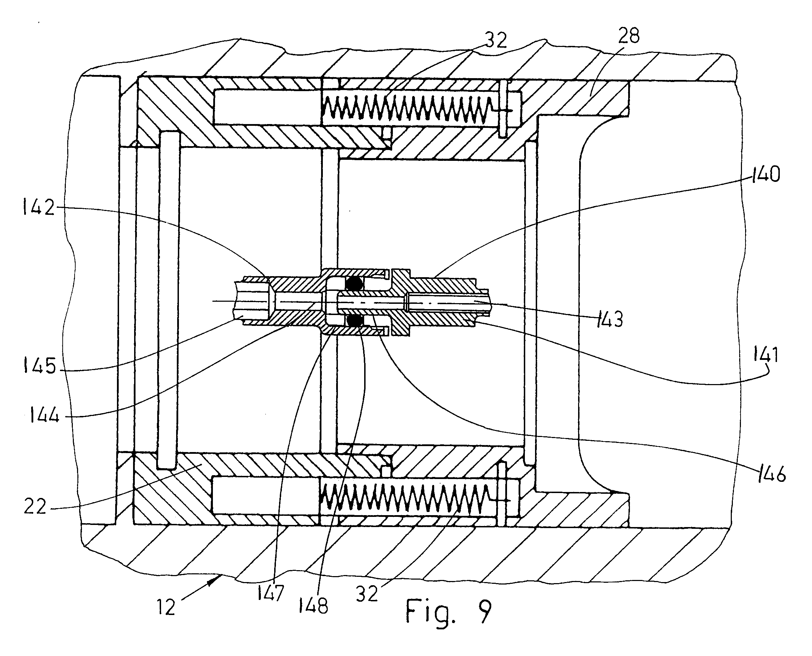

Fig. 9 illustrates another embodiment of the invention in which means are provided for feeding fluid, e.g. gas, through the connector for any purposes, such as for providing an inert gas atmosphere, or the like. Fig. 9 is a cross-section similar to Fig. 8, wherein the corresponding parts are indicated by the same numerals. In addition to the parts shown in Fig. 8, this embodiment of the invention also comprises a gas connector generally indicated at 140, which comprises a male member 141 and a female member 142. Male member 141 is attached, in any convenient way, to plug 11, and female member 142 is attached, in any convenient way, to socket member 12. The reverse could also be true, and the female member could be attached to the plug and the male member to the socket. Male member 141 comprises a tubular passage 143 for connection to a fluid line, not shown, and female member 142 has a tubular passage 144 for connection, through a socket 145, to a fluid line. Male member 141 has a nozzle portion 146 which is received, when the corrector is engaged as shown in Fig. 9, into a cup-like receiving portion 147 of female member 142. A gas seal is provided by a gasket 148 between the outer surface of nozzle portion 146 of the male member and the inner surface of cup-shaped portion 147 of the female member. A continued, sealed passage is thus determined between the tubular passages 143 and 144.

Fig. 9 also illustrates another embodiment of the invention, in which the connector assembly is used to provide passage of a gas or other fluid, without optical or electrical terminals being present.

Fig. 10 schematically illustrates a structure such as that of Fig. 9, in which optical fiber terminals 150 and 151, with optical fiber ends 152 and 153, are shown in mutually engaged position. Different optical terminals or electrical terminals could be provided, and more than one type of terminals could be housed by the same connector, by suitably positioning them therein.

While embodiments of the invention has been described by way of illustration, it will be clear that it can be carried out with numerous variations, modifications and adaptations, without departing from its spirit or exceeding the scope of the claims.

## Claims

**1 -** Connector assembly for optical or electrical conductor or fluid line terminals, characterized in that it comprises:
a - a socket member, having a cavity defined therein for receiving first terminals;
b - a plug member, having a cavity defined therein for receiving second terminals;
c - said socket and said plug members being mutually displaceable mutually to engage them, whereby to bring said first and second terminals into an engaged or connected positioned relationship, or mutually to disengage them, whereby to bring said first and second terminals into a disengaged or disconnected, spaced positioned relationship;
d - first cover means in said socket member, having a closed and an open position and screening, when in said closed position, said first terminals from the environment and baring said first terminals when in said open position;
e - second cover means in said plug member, having a closed and an open position and screening, when in said closed position, said second terminals from the environment and baring said second terminals when in said open position;
f - elastic means for urging said first and second cover means to their respective closed positions when said socket and said plug members are not in their engaged positioned relationship;
g - first opening means in fixed positioned relationship with respect to said socket member for bringing said second cover means to its open position when said socket and said plug members are mutually displaced to bring them to their engaged positioned relationship; and
h - second opening means in fixed positioned relationship with respect to said plug member for bringing said first cover means to its open position when said plug and said socket members are mutually displaced to bring them to their engaged positioned relationship;
i - said elastic means being effective to return said first and second cover means to their closed positions when said socket and plug members are mutually displaced mutually to bring them to their disengaged positioned relationship.

**2 -** Connector assembly according to claim 1, further comprising guide means in fixed positioned relationship to said socket and said plug members for guiding the same in their mutual displacements.

**3 -** Connector assembly according to claim 1, wherein said first and second opening means are so positioned with respect to each other that one of them becomes operative to open one of said cover means before the other one of them becomes so operative.

**4 -** Connector assembly according to claim 1, wherein the first opening means is defined in a base rigidly connected with the socket member and the second opening means is defined in a handle rigidly connected with the plug member.

**5 -** Connector assembly according to claim 3, wherein the guide means for guiding the socket and plug members in their mutual displacements comprise a groove and a rib slidable therein, one of said groove and rib being defined in a base rigidly connected with the socket member and the other one of said groove and rib being defined in a base rigidly connected with the plug member.

**6 -** Connector assembly according to claim 1, wherein the first and second cover means are pivoted to the plug and socket member respectively and are swingable from the closed to the open position thereof, and vice versa.

**7 -** Connector assembly according to claim 6, wherein the elastic means are first and second tension springs attached to said first and second cover respectively so as to exert thereon a moment of rotation.

**8 -** Connector assembly according to claim 7, wherein the first opening means comprise at least one first surface in fixed positioned relationship to the socket member and at least one second surface in fixed positioned relationship to the first cover, said surfaces coming into engagement when the plug and socket member are displaced mutually to engage them, and said surfaces being so positioned that said first surface exerts a pressure on said second surface, when they come into engagement, which produces a moment on said first cover having the opposite direction to the moment exerted thereon by the first tension spring.

**9 -** Connector assembly according to claim 7, wherein the second opening means comprise at least one third surface on the plug member and at least one fourth surface on the second cover, said surfaces coming into engagement when said plug and socket member are displaced mutually to engage them, and said surfaces being so positioned that said first surface exerts a pressure on said second surface, when they come into engagement, which produces a moment on said second cover having the opposite direction to the moment exerted thereon by said second tension spring.

**10 -** Connector assembly according to claim 8, wherein the first surface of the first opening means is a shoulder on a base rigid to the socket member transverse to the mutual displacement of the plug and socket members.

**11 -** Connector assembly according to claim 9, wherein the third surface of the fourth opening means is a shoulder defined by a projection on a handle rigid to the plug member, said shoulder being transverse to the mutual displacement of the plug and socket members.

**12 -** Connector assembly according to claim 1, wherein said plug and socket members have seats defined therein for receiving the second and first cover, respectively, when the same are in their open positions.

**13 -** Connector assembly according to claim 6, wherein the first and second cover means are so pivoted to the plug and socket member respectively as to swing in opposite directions when they both swing from the closed to the open position thereof, and vice versa.

**14 -** Connector assembly according to claim 7, wherein the first and second cover means are swingable plates and the tension springs are so connected to said cover means and to the plug and socket members, respectively, that their axes lie approximately in the central planes of said plates when said covers are in their open positions.

**15 -** Connector assembly according to claim 1, wherein the plug member has a terminal portion so dimensioned as to fit, at least in part, within the cavity defined in the socket member when the plug and in the socket members are mutually engaged.

**16 -** Connector assembly according to claim 1, wherein the terminals are optical or electrical terminals, and their engaged positioned relationship is such that signals may be transmitted therebetween..

**17 -** Connector assembly according to claim 1, wherein the terminals are mutually engageable fluid ports provided in the plug and socket members, said ports being so positioned as to come into mutual engagement when the plug and socket members are engaged.

**18 -** Connector assembly according to claim 16, wherein mutually engageable fluid terminals are additionally provided in the plug and socket members.

**19 -** Connector assembly according to claim 17, wherein the fluid ports are defined in a male element and in a female element respectively, one of said elements being attached to the plug member and the other to the socket member, a gasket seal being provided between said elements.
